# EUROPÄISCHE PATENTSCHRIFT

(11) **EP 3 322 622 B1**
(45) Veröffentlichungstag und Bekanntmachung des Hinweises auf die Patenterteilung: **24.04.2019**
(21) Anmeldenummer: 16739138.2
(22) Anmeldetag: 15.07.2016
(51) Int. Cl.: B60T 17/00, F16L 55/033

(54) **SCHALLDÄMPFUNGSSYSTEM**
SOUND ATTENUATOR SYSTEM
SYSTÈME AMORTISSEUR DE BRUIT

(30) Priorität: 16.07.2015 DE 102015111515
(43) Veröffentlichungstag der Anmeldung: 23.05.2018
(73) Patentinhaber: KNORR-BREMSE Systeme für Nutzfahrzeuge GmbH, 80809 München (DE)
(72) Erfinder: WEIGEL, Conni, 86156 Augsburg (DE)
(86) Internationale Anmeldenummer: PCT/EP2016/066854
(87) Internationale Veröffentlichungsnummer: WO 2017/009443

(56) Entgegenhaltungen:
- DE-A1- 3 311 682
- DE-A1- 4 237 630
- DE-A1-102013 013 281

## Beschreibung

Die vorliegende Erfindung betrifft ein Schalldämpfungssystem, insbesondere ein Schalldämpfungssystem einer Druckluftaufbereitungsanlage. Die Erfindung betrifft außerdem eine Druckluftaufbereitungsanlage mit einem solchen Schalldämpfungssystem, insbesondere eine Druckluftaufbereitungsanlage für Kraftfahrzeuge.

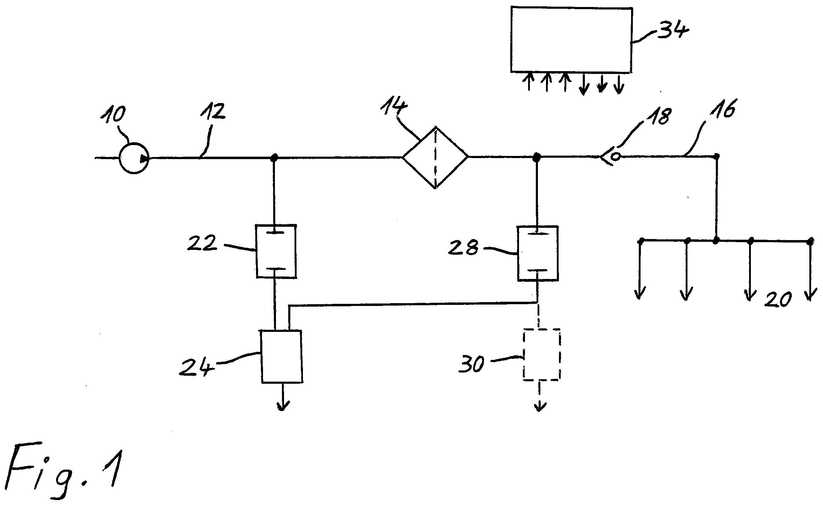

Eine Druckluftaufbereitungsanlage, wie sie beispielsweise für pneumatische Bremsanlagen von Kraftfahrzeugen, insbesondere Nutzfahrzeugen, verwendet werden kann, ist beispielhaft in Fig. 1 veranschaulicht. Solche Druckluftaufbereitungsanlagen weisen üblicherweise einen Kompressor 10 auf, der über eine Eingangsleitung 12 mit einer Lufttrocknereinrichtung 14 verbunden ist, welche zum Beispiel eine Lufttrocknerpatrone enthält. Die Lufttrocknereinrichtung 14 ist ausgangsseitig mit einer Hauptleitung 16 verbunden, in der ein Rückschlagventil 18 angeordnet ist. Mit dieser Hauptleitung 16 sind mehrere Druckluftanschlüsse 20 verbunden, an die verschiedene Druckluftbehälter oder Druckluftverbraucher (z.B. Betriebsbremse, Feststellbremse, Luftfederung, etc.) angeschlossen werden können.

Zum Regeln der Druckverhältnisse in der Druckluftaufbereitungsanlage, zum Durchführen eines Regenerationsprozesses für die Lufttrocknereinrichtung und zum Durchführen eines Abschaltvorganges der Anlage sind in der Regel stromauf der Lufttrocknereinrichtung 14 ein Ablassventil 22 und stromab der Lufttrocknereinrichtung 14 ein Regerationsventil 28, das üblicherweise eine Umgehung des Rückschlagventils 18 schafft, vorgesehen. Das Ablassventil 22 und das Regenerationsventil 28 entlüften über einen Schalldämpfer 24. Alternativ kann das Regenerationsventil 28 auch über einen Schalldämpfer 30 stromab der Lufttrocknereinrichtung 14 entlüften, wie in Fig. 1 durch gestrichelte Linien angedeutet. Die Schalldämpfer 24, 30 dienen jeweils dem Ableiten und Entspannen der Druckluft aus der Druckluftaufbereitungsanlage unter gleichzeitiger Dämpfung der Ausströmgeräusche der Druckluft.

Solche Druckluftaufbereitungsanlagen sind beispielsweise aus der DE 199 11 741 B4 und der DE 10 2006 034 762 B3 bekannt.

Die Schalldämpfer für solche Druckluftaufbereitungsanlagen weisen üblicherweise ein topfartiges Gehäuse auf, in dem ein Schallreduktionsmaterial in Form eines ein- oder mehrlagig gewickelten Gestricks angeordnet ist, wie dies beispielsweise aus der EP 2 152 556 B1 bekannt ist.

Die DE 33 11 682 A1 und DE 42 37 630 A1 offenbaren jeweils einen Schalldämpfer mit einem derartigen topfförmigen Gehäuse und einem darin befindlichen Schallreduktionsmaterial beziehungsweise mehreren in Serie geschalteten Räumen die die Luft beim Entweichen aus dem Schalldämpfer durchströmen muss und somit ebenfalls schallreduzierend wirken.

Der in der DE 10 2013 013281 A1 offenbarte Schalldämpfer, weist darüber hinaus einen Prallboden auf, auf den Luft nach dem Eintritt durch die Eintrittsöffnung auftrifft. Anschließend gelangt sie über einen Zentraldurchlass und über einen Randdurchlass in einen Entspannungsraum. Von dort durchströmt die Luft wiederum ein Schallreduktionsmaterial bevor sie durch die Auslassöffnung ausgeleitet wird.Im Hinblick auf immer strengere Anforderungen an die Geräuschemissionen und immer leiser werdende Kraftfahrzeuge besteht Bedarf an Pneumatik-Schalldämpfungssystemen, deren Schallreduktionswirkung weiter verbessert ist.

Der Erfindung liegt daher die Aufgabe zugrunde, ein Schalldämpfungssystem mit verbesserten Schalldämpfungseigenschaften vorzusehen
Das Schalldämpfungssystem soll bevorzugt für den Einsatz in Druckluftaufbereitungsanlagen von Kraftfahrzeugen geeignet sein. In bevorzugten Ausgestaltungen soll das Schalldämpfungssystem für den Einsatz stromauf der Lufttrocknereinrichtung solcher Druckluftaufbereitungsanlagen geeignet sein. Diese Aufgabe wird gelöst durch ein Schalldämpfungssystem mit den Merkmalen des unabhängigen Anspruchs 1. Besonders vorteilhafte Ausgestaltungen der Erfindung sind Gegenstand der abhängigen Ansprüche.

Das Schalldämpfungssystem der Erfindung weist einen Schalldämpfer auf, der ein Gehäuse mit einer Einlassöffnung und wenigstens einer Auslassöffnung sowie eine Schallreduktionseinrichtung zum Reduzieren von Strömungsgeräuschen einer durch sie hindurch strömenden Druckluft, die in dem Gehäuse zwischen der Einlassöffnung und der wenigstens einen Auslassöffnung angeordnet ist, auf. Das Schalldämpfungssystem der Erfindung weist ferner eine weitere Schallreduktionseinrichtung zum Reduzieren von Strömungsgeräuschen einer durch sie hindurch strömenden Druckluft auf, die stromauf der Schallreduktionseinrichtung angeordnet ist, wobei diese weitere Schallreduktionseinrichtung eine Einströmöffnung, wenigstens eine Ausströmöffnung und wenigstens ein Umlenkelement zum Umlenken der durch die Einströmöffnung einströmenden Druckluft in Richtung zu der wenigstens einen Ausströmöffnung aufweist.

Gemäß der Erfindung weist das Pneumatik-Schalldämpfungssystem eine weitere Schallreduktionseinrichtung auf, welche der auch bei herkömmlichen Schalldämpfungssystemen im Schalldämpfer vorhandenen Schallreduktionseinrichtung vorgeschaltet ist. Durch diese weitere Schallreduktionseinrichtung lassen sich die Geräuschemissionen beim Ableiten der Druckluft weiter reduzieren.

Durch die spezielle Konfiguration der weiteren Schallreduktionseinrichtung, in welcher die durch sie hindurch strömende Druckluft umgelenkt wird, können die bei der Expansion der Druckluft entstehenden Schallwellen effektiv zerstreut werden. Es lässt sich so der Vorteil einer weiteren Reduzierung der Geräuschemissionen erzielen.

In einer Ausgestaltung der Erfindung kann das wenigstens eine Umlenkelement der weiteren Schallreduktionseinrichtung eine Prallplatte aufweisen, die der Einströmöffnung gegenüber angeordnet ist. Dabei ist eine Querausdehnung dieser Prallplatte bevorzugt größer als eine Querausdehnung der Einströmöffnung. Außerdem ist dabei die Prallplatte vorzugsweise in einem Abstand zur Einströmöffnung angeordnet, der höchstens das Dreifache der Querausdehnung der Einströmöffnung beträgt. Durch eine geeignete Dimensionierung und Beabstandung der Prallplatte relativ zur Einströmöffnung kann erreicht werden, dass die durch die Einströmöffnung einströmende Druckluft auf die Prallplatte trifft, um von dieser in Richtung zu den Ausströmöffnungen umgelenkt zu werden, und nicht an der Prallplatte vorbei direkt in die Ausströmöffnungen strömen kann.

Die der Einströmöffnung zugewandte Seite der Prallplatte weist vorzugsweise eine Kontur oder ein Profil auf. Mit anderen Worten ist die Prallplatte vorzugsweise nicht eben ausgebildet. Durch eine solche Konfiguration können einerseits die Umlenkwirkungen der Prallplatte verbessert und andererseits die Geräuschentwicklung beim Auftreffen der Druckluft auf die Prallplatte vermindert werden.

In einer weiteren Ausgestaltung der Erfindung kann ein minimaler Strömungsquerschnitt der weiteren Schallreduktionseinrichtung wenigstens etwa 3 mm, bevorzugt wenigstens etwa 5 mm betragen. Auf diese Weise kann gewährleistet werden, dass Verschmutzungen mit einer kleineren Größe die weitere Schallreduktionseinrichtung passieren können, sodass das gesamte Schalldämpfungssystem der Erfindung für den Einsatz stromauf einer Lufttrocknereinrichtung einer Druckluftaufbereitungsanlage geeignet ist. Bei einer typischen Korngröße von bis zu etwa 4,5 mm einer vom Kompressor geförderten Ölkohle beträgt der minimale Strömungsquerschnitt der weiteren Schallreduktionseinrichtung bevorzugt wenigstens etwa 5 mm. Der minimale Strömungsquerschnitt der weiteren Schallreduktionseinrichtung kann in diesem Zusammenhang durch Bauteile der weiteren Schallreduktionseinrichtung selbst, durch an der weiteren Schallreduktionseinrichtung montierte Adapter oder durch die Fluidverbindung zwischen z.B. einer Druckluftaufbereitungsanlage und der weiteren Schallreduktionseinrichtung gebildet sein.

In einer weiteren Ausgestaltung der Erfindung kann in dem Gehäuse des Schalldämpfers stromauf der Schallreduktionseinrichtung ein Zwischenraum zum Aufnehmen von in der Druckluft enthaltenen Verschmutzungen vorgesehen sein. Mit dieser Ausgestaltung ist der Schalldämpfer des erfindungsgemäßen Schalldämpfungssystems insbesondere auch für den Einsatz in Druckluftaufbereitungsanlagen stromauf der Lufttrocknereinrichtung einsetzbar. Der Zwischenraum des Schalldämpfers stromauf der Schallreduktionseinrichtung kann als Ablagerungsraum für in der Druckluft enthaltene Schmutzpartikel (z.B. Ölkohle) dienen. Die Eignung des Zwischenraums zum Aufnehmen von in der Druckluft enthaltenen Verschmutzungen kann insbesondere durch eine geeignete Dimensionierung des Zwischenraums erreicht werden.

In einer Ausgestaltung der Erfindung kann die weitere Schallreduktionseinrichtung in dem Gehäuse des Schalldämpfers integriert sein. In diesem Fall steht die Einströmöffnung der weiteren Schallreduktionseinrichtung bevorzugt mit der Einlassöffnung des Gehäuses in Fluidverbindung und steht die wenigstens eine Ausströmöffnung der weiteren Schallreduktionseinrichtung bevorzugt mit der Schallreduktionseinrichtung in Fluidverbindung.

Vorzugsweise weist das Gehäuse des Schalldämpfers einen Einlassstutzen auf, der mit der Einlassöffnung versehen ist und in dem die weitere Schallreduktionseinrichtung angeordnet ist. Dabei kann der Einlassstutzen vorzugsweise als Anschluss oder Adapter an ein Druckluftventil oder eine Druckluftleitung ausgestaltet sein.

Vorzugsweise kann bei dieser Ausgestaltung des Schalldämpfungssystems die wenigstens eine Ausströmöffnung der weiteren Schallreduktionseinrichtung über einen Spalt zwischen der weiteren Schallreduktionseinrichtung und dem Gehäuse mit der weiteren Schallreduktionseinrichtung oder - falls vorhanden - dem Zwischenraum verbunden sein. Eine Breite dieses Spalts ist dabei bevorzugt mindestens so groß ist wie eine Querausdehnung der Einströmöffnung. Der Spalt ist vorzugsweise als Ringspalt ausgebildet, der die weitere Schallreduktionseinrichtung umgibt. Durch eine geeignete Dimensionierung des Spalts kann gewährleistet werden, dass in der Druckluft enthaltene Verschmutzungen den Spalt passieren und in den Zwischenraum bzw. zur Schallreduktionseinrichtung gelangen können.

In einer anderen Ausgestaltung der Erfindung kann die weitere Schallreduktionseinrichtung stromauf des Gehäuses des Schalldämpfers vorgesehen sein. Dabei steht bevorzugt die wenigstens eine Ausströmöffnung der weiteren Schallreduktionseinrichtung mit der Einlassöffnung des Gehäuses in Fluidverbindung. Bei dieser Ausgestaltung der Erfindung kann die weitere Schallreduktionseinrichtung vorzugsweise in einem Gehäuse einer Lufttrocknereinrichtung einer Druckluftaufbereitungsanlage integriert sein.

Gegenstand der Erfindung ist auch eine Druckluftaufbereitungsanlage, insbesondere für Kraftfahrzeuge, die ein oben beschriebenes Schalldämpfungssystem der Erfindung aufweist.

Dabei kann der Schalldämpfer des Schalldämpfungssystems bevorzugt mit einem Ausgang eines Ablassventils verbunden sein, welches stromauf einer Lufttrocknereinrichtung vorgesehen ist.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
- Fig. 1: ein stark vereinfachtes Schaltungsdiagramm einer Druckluftaufbereitungsanlage, in welcher ein erfindungsgemäß ausgestaltetes Schalldämpfungssystem einsetzbar ist; und
- Fig. 2: eine Schnittansicht eines Schalldämpfungssystems gemäß einem Ausführungsbeispiel der Erfindung.

Das Schalldämpfungssystem der Erfindung ist besonders vorteilhaft in einer Druckluftaufbereitungsanlage eines Kraftfahrzeugs, insbesondere eines Nutzfahrzeugs, einsetzbar, wie sie stark vereinfacht in Fig. 1 veranschaulicht ist. Dabei ist das Schalldämpfungssystem der Erfindung insbesondere zum Anschluss an das Ablassventil 22 stromauf der Lufttrocknereinrichtung 14 geeignet. das Schalldämpfungssystem der Erfindung kann aber ebenso an das Regenerationsventil 28 stromab der Lufttrocknereinrichtung 14 angeschlossen werden.

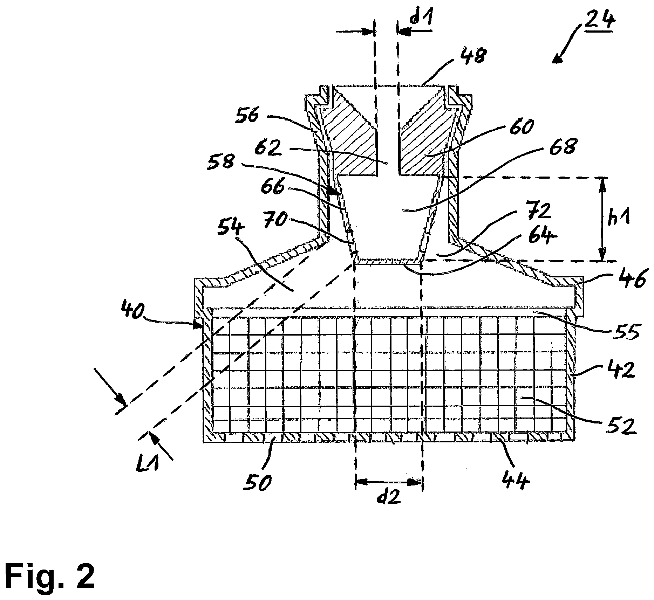

Der Aufbau eines Schalldämpfungssystems gemäß einem Ausführungsbeispiel der vorliegenden Erfindung wird Bezug nehmend auf Fig. 2 in mehr Einzelheiten erläutert.

Das Schalldämpfungssystem weist insbesondere einen Schalldämpfer 24 auf, der ein Gehäuse 40 mit einem im Wesentlichen zylindrischen Topfmantel 42, einem Topfboden 44 und einem Deckel 46 aufweist. Der Deckel 46 ist mit dem Topfmantel 42 zum Beispiel verschraubt oder durch einen Rast- oder Schnappverschluss verbunden. Im Deckel 46 ist eine axiale Einlassöffnung 48 vorgesehen, und im Topfboden 44 sind mehrere Auslassöffnungen 50 vorgesehen. Alternativ oder zusätzlich können auch im Topfmantel 42 Auslassöffnungen 50 vorgesehen sein. Die Auslassöffnungen 50 sind beispielsweise mit einem Auslass in die Atmosphäre verbunden oder bilden selbst einen solchen Auslass.

Im zylindrischen Topfmantel 42 des Gehäuses 40 ist eine Schallreduktionseinrichtung 52 angeordnet. Diese Schallreduktionseinrichtung 52 weist ein Gestrick auf, das ein- oder mehrlagig gewickelt ist und bevorzugt aus Metall gefertigt ist. Durch das schallabsorbierende Gestrick können die bei der Expansion der Druckluft entstehenden Geräusche in bekannter Weise absorbiert und die Geräuschemissionen so reduziert werden.

Für die Schallreduktionseinrichtung 52 können grundsätzlich beliebige Konfigurationen und Schalldämpfungsmaterialien verwendet werden, die dem Fachmann bekannt sind oder werden.

In dem gezeigten Ausführungsbeispiel ist der Deckel 46 des Gehäuses 40 haubenartig ausgebildet, sodass stromauf der Schallreduktionseinrichtung 52 im Gehäuse 40 ein Zwischenraum 54 gebildet ist. Dieser Zwischenraum 54 dient als ein Ablagerungsraum, in dem in der Druckluft enthaltene Verschmutzungen wie zum Beispiel eine vom Kompressor 10 geförderte Ölkohle aufgenommen werden können. Optional kann die Schallreduktionseinrichtung 52 von diesem Zwischenraum 54 durch ein Lochblech 55 abgegrenzt werden.

Bei einer solchen Ausführungsform mit einem solchen Zwischenraum 54 stromauf der Schallreduktionseinrichtung kann der Schalldämpfer 24 in vorteilhafterweise auch stromauf der Lufttrocknereinrichtung 14 in der Druckluftaufbereitungsanlage eingesetzt werden. In alternativen Ausführungsformen kann auf einen solchen Zwischenraum 54 auch verzichtet werden. In einem solchen Fall wird der Schalldämpfer dann vorzugsweise stromab der Lufttrocknereinrichtung 14 in der Druckluftaufbereitungsanlage eingesetzt, wie durch den Schalldämpfer 30 in Fig. 1 angedeutet.

Auf der dem Topfmantel 42 abgewandten Seite ist der Deckel 46 des Gehäuses 40 mit einem Einlassstutzen 56 ausgebildet. Dieser Einlassstutzen 56 ist zur Verbindung mit einer Druckluftleitung oder einem Druckluftventil, insbesondere dem Ablassventil 22, zum Beispiel in Form eines Adapters ausgestaltet.

Innerhalb des Einlassstutzens 56 und somit stromauf der Schallreduktionseinrichtung 52 und auch stromauf des Zwischenraums 54 ist eine weitere Schallreduktionseinrichtung 58 angeordnet, welche die Geräuschemissionen noch weiter reduzieren soll. Bei einem Einsatz stromauf der Lufttrocknereinrichtung 14 muss gleichzeitig gewährleistet sein, dass die in der Druckluft enthaltenen Verschmutzungen die weitere Schallreduktionseinrichtung 58 passieren und in den Zwischenraum 54 gelangen können.

Die weitere Schallreduktionseinrichtung 58 ist in dem gezeigten Ausführungsbeispiel in der Art einer Düse aufgebaut. Diese ist gegen das Gehäuse 40 bzw. den Einlassstutzen 56 des Deckels 46 abgedichtet.

Wie in Fig. 2 dargestellt, hat die weitere Schallreduktionseinrichtung 58 eine Blende 60 mit einer mittigen Einströmöffnung 62, die mit der Einlassöffnung 62 im Einlassstutzen 56 des Deckels 46 in (Fluid-)Verbindung steht. Diese Einströmöffnung 62 hat einen Strömungsquerschnitt mit einem Durchmesser d1 von zum Beispiel 5 mm, sodass vom Kompressor geförderte Ölkohle einer Korngröße von bis zu etwa 4,5 mm die Einströmöffnung 62 passieren kann.

In einem Abstand h1 von zum Beispiel wenigstens etwa 15 mm ist der Einströmöffnung 62 gegenüber eine Prallplatte 64 (Umlenkelement der Erfindung) angeordnet. Allgemein ist der Abstand h1 bevorzugt höchstens dreimal so groß wie der Durchmesser d1 der Einströmöffnung 62 gewählt (h1/d1 ≤ 3).

Die Blende 60 und die Prallplatte 64 sind über einen konischen Verbindungsmantel 66 miteinander verbunden. Der Durchmesser d2 der Prallplatte 64 und der Abstand h1 der Prallplatte 64 von der Einströmöffnung 62 sind so gewählt, dass die durch die Einströmöffnung 62 eintretende Druckluft auf die Prallplatte 64 trifft und nicht an ihr vorbei strömen kann. Der Durchmesser d2 beträgt zum Beispiel wenigstens etwa 10 mm. Der Verbindungsmantel 66, die Blende 60 und die Prallplatte 64 bilden zwischen sich einen Entspannungsraum 68 für die eintretende Druckluft.

In dem der Prallplatte 64 zugewandten Endbereich ist der Verbindungsmantel 66 mit mehreren radialen Ausströmöffnungen 70 ausgebildet. Ein Durchmesser bzw. eine Breite dieser Ausströmöffnungen 70 beträgt bevorzugt wenigstens etwa 5 mm. Zwischen der Prallplatte 64 und dem Deckel 46 des Gehäuses 40 ist zudem ein Ringspalt 72 vorgesehen. Eine Breite L1 dieses Ringspalts 72 ist wenigstens so groß wie der Durchmesser d1 der Einströmöffnung 62 gewählt (L1 ≥ d1).

In diesem Ausführungsbeispiel bildet die Einströmöffnung 62 in der Blende 60 den minimalen Strömungsquerschnitt der weiteren Schallreduktionseinrichtung 58. Dieser Strömungsquerschnitt (Durchmesser d1) bestimmt, bis zu welcher Größe in der Druckluft enthaltene Verschmutzungen die weitere Schallreduktionseinrichtung 58 passieren und in den Zwischenraum 54 gelangen können.

Durch eine Veränderung der Parameter, insbesondere von d1 und h1, können die weitere Schallreduktionseinrichtung 58 und damit der gesamte Schalldämpfer 24 an verschiedene Rahmenbedingungen (z.B. Druckverhältnisse, Art und Größe der Verschmutzungen in der Druckluft, etc.) angepasst werden.

Die durch den Ablassfilter 22 ausströmende Druckluft gelangt über den Einlassstutzen 56 in den Schalldämpfer 24. Die durch die Einströmöffnung 62 der weiteren Schallreduktionseinrichtung 58 eintretende Druckluft trifft auf die Prallplatte 64 und wird an dieser in Richtung zu den Ausströmöffnungen 70 umgelenkt. Durch die so erzielte Zerstreuung der Schallwellen, die bei der Expansion der Druckluft im Entspannungsraum 68 entstehen, kann die Geräuschemission reduziert werden.

Um zu verhindern, dass beim Auftreffen der Druckluft auf die Prallplatte 64 zusätzliche Geräusche entstehen, ist die der Einströmöffnung 62 zugewandte Seite der Prallplatte 64 bevorzugt mit einer Kontur oder einem Profil ausgestaltet (nicht dargestellt). Beispielsweise ist die Prallplatte 64 konisch in den Entspannungsraum 68 hinein ragend geformt und/oder mit einem oder mehreren Stegen ausgebildet.

Über den Ringspalt 72 gelangt die (teilentspannte) Druckluft weiter in den Zwischenraum 54 des Gehäuses 40. Auf dem Lochblech 55 können sich die in der Druckluft enthaltenen Verschmutzungen im Zwischenraum 54 ablagern. Anschließend durchströmt die Druckluft das Gestrick der Schallreduktionseinrichtung 52, wobei die Druckluft weiter expandiert und die dabei entstehenden Geräusche in dem Gestrick absorbiert werden. Schließlich verlässt die (Druck-)Luft den Schalldämpfer 24 durch die Auslassöffnungen 50 im Topfboden 44 des Gehäuses, bevor sie in die Atmosphäre ausgegeben wird.

In dem oben beschriebenen Ausführungsbeispiel von Fig. 2 ist die weitere Schallreduktionseinrichtung 58 im Gehäuse 40 des Schalldämpfers 24 integriert. Es ist im Rahmen der Erfindung aber ebenso möglich, die weitere Schallreduktionseinrichtung 58 separat von dem Schalldämpfer 24 mit der Schallreduktionseinrichtung 52 vorzusehen und beispielsweise in ein Gehäuse der Lufttrocknereinrichtung 14 zu integrieren.

## Patentansprüche

1. Schalldämpfungssystem, insbesondere einer Druckluftaufbereitungsanlage eines Kraftfahrzeugs, aufweisend:
einen Schalldämpfer (24, 30), der ein Gehäuse (40) mit einer Einlassöffnung (48) und wenigstens einer Auslassöffnung (50) sowie eine Schallreduktionseinrichtung (52) zum Reduzieren von Strömungsgeräuschen einer durch sie hindurch strömenden Druckluft, die in dem Gehäuse (40) zwischen der Einlassöffnung (48) und der wenigstens einen Auslassöffnung (50) angeordnet ist, aufweist; und
eine weitere Schallreduktionseinrichtung (58) zum Reduzieren von Strömungsgeräuschen einer durch sie hindurch strömenden Druckluft, die stromauf der Schallreduktionseinrichtung (52) angeordnet ist,
wobei die weitere Schallreduktionseinrichtung (58) eine Einströmöffnung (62), wenigstens eine Ausströmöffnung (70) und wenigstens ein Umlenkelement (64) zum Umlenken der durch die Einströmöffnung (62) einströmenden Druckluft in Richtung zu der wenigstens einen Ausströmöffnung (70) aufweist,
**dadurch gekennzeichnet, dass** das wenigstens eine Umlenkelement (64) eine Prallplatte aufweist, die der Einströmöffnung (62) gegenüber angeordnet ist, wobei eine Querausdehnung (d2) dieser Prallplatte größer ist als eine Querausdehnung (d1) der Einströmöffnung (62).

2. Schalldämpfungssystem nach Anspruch 1, bei welchem
die Prallplatte in einem Abstand (h1) zur Einströmöffnung (62) angeordnet ist, der höchstens das Dreifache der Querausdehnung (d1) der Einströmöffnung (62) beträgt.

3. Schalldämpfungssystem nach Anspruch 1 oder 2, bei welchem
eine der Einströmöffnung (62) zugewandte Seite der Prallplatte mit einer Kontur oder einem Profil ausgestaltet ist.

4. Schalldämpfungssystem nach einem der vorhergehenden Ansprüche, bei welchem
ein minimaler Strömungsquerschnitt der weiteren Schallreduktionseinrichtung (58) wenigstens etwa 3 mm, bevorzugt wenigstens etwa 5 mm beträgt.

5. Schalldämpfungssystem nach einem der vorhergehenden Ansprüche, bei welchem
in dem Gehäuse (40) des Schalldämpfers (24) stromauf der Schallreduktionseinrichtung (52) ein Zwischenraum (54) zum Aufnehmen von in der Druckluft enthaltenen Verschmutzungen vorgesehen.

6. Schalldämpfungssystem nach einem der Ansprüche 1 bis 5, bei welchem
die weitere Schallreduktionseinrichtung (58) in dem Gehäuse (40) des Schalldämpfers (24, 30) integriert ist, wobei die Einströmöffnung (62) der weiteren Schallreduktionseinrichtung (58) mit der Einlassöffnung (48) des Gehäuses (40) in Fluidverbindung steht und die wenigstens eine Ausströmöffnung (70) der weiteren Schallreduktionseinrichtung (58) mit der Schallreduktionseinrichtung (52) in Fluidverbindung steht.

7. Schalldämpfungssystem nach Anspruch 6, bei welchem
das Gehäuse (40) einen Einlassstutzen (56) aufweist, der mit der Einlassöffnung (48) versehen ist und in dem die weitere Schallreduktionseinrichtung (58) angeordnet ist.

8. Schalldämpfungssystem nach Anspruch 7, bei welchem der Einlassstutzen (56) als Anschluss an ein Druckluftventil oder eine Druckluftleitung ausgestaltet ist.

9. Schalldämpfungssystem nach einem der Ansprüche 6 bis 8, bei welchem
die wenigstens eine Ausströmöffnung (70) der weiteren Schallreduktionseinrichtung (58) über einen Spalt (72) zwischen der weiteren Schallreduktionseinrichtung (58) und dem Gehäuse (40) mit der weiteren Schallreduktionseinrichtung (58) bzw. dem Zwischenraum (54) verbunden ist, wobei eine Breite (L1) dieses Spalts (72) mindestens so groß ist wie eine Querausdehnung (d1) der Einströmöffnung (62).

10. Schalldämpfungssystem nach einem der Ansprüche 1 bis 5, bei welchem
die weitere Schallreduktionseinrichtung (58) stromauf des Gehäuses (40) des Schalldämpfers (24, 30) vorgesehen ist, wobei die wenigstens eine Ausströmöffnung (70) der weiteren Schallreduktionseinrichtung (58) mit der Einlassöffnung (48) des Gehäuses (40) in Fluidverbindung steht.

11. Druckluftaufbereitungsanlage, insbesondere für Kraftfahrzeuge, aufweisend ein Schalldämpfungssystem nach einem der vorhergehenden Ansprüche.

12. Druckluftaufbereitungsanlage nach Anspruch 11, bei welcher der Schalldämpfer (24) mit einem Ausgang eines Ablassventils (22) verbunden ist, welches stromauf einer Lufttrocknereinrichtung (14) vorgesehen ist.

## Claims

1. Sound suppression system, in particular for a compressed air production unit of a motor vehicle, comprising:
a sound suppressor (24, 30) which comprises a housing (40) with an inlet opening (48) and at least one outlet opening (50) and a noise-attenuation device (52) for reducing flow noises of compressed air flowing through it, which device is arranged in the housing (40) between the inlet opening (48) and the at least one outlet opening (50), and
a further noise-attenuation device (58) for reducing flow noises of compressed air flowing through it, which device is arranged upstream from the noise-attenuation device (52),
wherein the further noise-attenuation device (58) comprises an inflow opening (62), at least one outflow opening (70) and at least one deflecting element (64) for deflecting the compressed air flowing in through the inflow opening (62) in the direction towards the at least one outflow opening (70),
**characterised in that** the at least one deflecting element (64) comprises a baffle plate arranged opposite the inflow opening (62), such that a transverse extension (d2) of the said baffle plate is larger than a transverse extension (d1) of the inflow opening (62).

2. Sound suppression system according to Claim 1, in which
the baffle plate is arranged a distance (h1) away from the inflow opening (62) which distance is at most three times the transverse extension (d1) of the inflow opening (62).

3. Sound suppression system according to Claims 1 or 2, in which
a side of the baffle plate facing towards the inflow opening (62) is designed with a contour or a profile.

4. Sound suppression system according to any of the preceding claims, in which
a minimum flow cross-section of the further noise-attenuation device (58) is at least around 3 mm, preferably at least around 5 mm.

5. Sound suppression system according to any of the preceding claims, in which
in the housing (40) of the sound suppressor (24), upstream from the noise-attenuation device (52), an intermediate space (54) is provided for receiving dirt particles present in the compressed air.

6. Sound suppression system according to any of Claims 1 to 5, in which
the further noise-attenuation device (58) is integrated in the housing (40) of the sound suppressor (24, 30), and the inflow opening (62) of the further noise-attenuation device (58) is in fluidic connection with the inlet opening (48) of the housing (40) and the at least one outflow opening (70) of the further noise-attenuation device (58) is in fluidic connection with the noise-attenuation device (52).

7. Sound suppression system according to Claim 6, in which
the housing (40) has an inlet connection piece (56), which is provided with the inlet opening (48) and in which the further noise-attenuation device (58) is arranged.

8. Sound suppression system according to Claim 7, in which
the inlet connection piece (56) is in the form of a connection to a compressed air valve or a compressed air line.

9. Sound suppression system according to any of Claims 6 to 8, in which
the at least one outflow opening (70) of the further noise-attenuation device (58) is connected with the further noise-attenuation device (58) or the intermediate space (54) by way of a gap (72) between the further noise-attenuation device (58) and the housing (40), such that the width (L1) of the said gap (72) is at least as large as a transverse extension (d1) of the inflow opening (62).

10. Sound suppression system according to any of Claims 1 to 5, in which
the further noise-attenuation device (58) is provided upstream from the housing (400 of the sound suppressor (24, 30), and the at least one outflow opening (70) of the further noise-attenuation device (58) is in fluidic connection with the inlet opening (48) of the housing (40).

11. Compressed air production unit, in particular for motor vehicles, comprising a sound suppression system according to any of the preceding claims.

12. Compressed air production unit according to Claim 11, in which
the sound suppressor (24) is connected to the outlet of a discharge valve (22) which is provided upstream from an air-drying device (14).

## Revendications

1. Système d'amortissement du bruit, notamment d'une installation de préparation d'air comprimé d'un véhicule automobile, comportant :
un silencieux (24, 30), qui a un boîtier (40), ayant une ouverture (48) d'admission et au moins une ouverture (50) d'échappement, ainsi qu'un dispositif (52) de réduction du bruit, pour réduire des bruits d'écoulement d'un air comprimé y passant, qui est monté dans le boîtier (40), entre l'ouverture (48) d'admission et la au moins une ouverture (50) d'échappement, et
un autre dispositif (58) de réduction du bruit, pour réduire des bruits d'écoulement d'un air comprimé y passant, qui est monté en amont du dispositif (52) de réduction du bruit,
dans lequel l'autre dispositif (58) de réduction du bruit a une ouverture (62) d'entrée, au moins une ouverture (70) de sortie et au moins un élément (64) de renvoi, pour renvoyer l'air comprimé entrant par l'ouverture (62) d'entrée, en direction de la au moins une ouverture (70) de sortie,
**caractérisé en ce que** le au moins un élément (64) de renvoi a une plaque de rebondissement, disposée en face de l'ouverture (62) d'entrée, une étendue (d2) transversale de cette plaque de rebondissement étant plus grande qu'une étendue (d1) transversale de l'ouverture (62) d'entrée.

2. Système d'amortissement du bruit suivant la revendication 1, dans lequel
la plaque de rebondissement est disposée à une distance (h1) de l'ouverture (62) d'entrée, qui représente, au plus, trois fois l'étendue (d1) transversale de l'ouverture (62) d'entrée.

3. Système d'amortissement du bruit suivant la revendication 1 ou 2, dans lequel
une face, tournée vers l'ouverture (62) d'entrée, de la plaque de rebondissement, a un contour ou un profil.

4. Système d'amortissement du bruit suivant l'une des revendications précédentes, dans lequel
une section transversale minimum d'écoulement de l'autre dispositif (58) de réduction du bruit est d'au moins environ 3 mm, de préférence d'au moins environ 5 mm.

5. Système d'amortissement du bruit suivant l'une des revendications précédentes, dans lequel
Il est prévu, dans le boîtier (40) du silencieux (24), en amont du dispositif (52) de réduction du bruit, un espace (54) intermédiaire de réception d'impuretés contenues dans l'air comprimé.

6. Système d'amortissement du bruit suivant l'une des revendications 1 à 5, dans lequel
l'autre dispositif (58) de réduction du bruit est intégré au boîtier (40) du silencieux (24, 30), l'ouverture (62) d'entrée de l'autre dispositif (58) de réduction du bruit est en liaison fluidique avec l'ouverture (48) d'admission du boîtier (40) et la au moins une ouverture (70) de sortie de l'autre dispositif (58) de réduction du bruit est en liaison fluidique avec le dispositif (52) de réduction du bruit.

7. Système d'amortissement du bruit suivant la revendication 6, dans lequel
le boîtier (40) a une tubulure (56) d'admission, qui est pourvue de l'ouverture (48) d'admission et dans laquelle est monté l'autre dispositif (58) de réduction du bruit.

8. Système d'amortissement du bruit suivant la revendication 7, dans lequel
la tubulure (56) d'admission est conformée en raccord à une soupape pour de l'air comprimé ou à un conduit pour de l'air comprimé.

9. Système d'amortissement du bruit suivant l'une des revendications 6 à 8, dans lequel
la au moins une ouverture (70) de sortie de l'autre dispositif (58) de réduction du bruit communique, par un intervalle (72) entre l'autre dispositif (58) de réduction du bruit et le boîtier (40), avec l'autre dispositif (58) de réduction du bruit ou avec l'espace (54) intermédiaire, une largeur (L1) de cet intervalle (72) étant au moins aussi grande qu'une étendue (d1) transversale de l'ouverture (62) d'entrée.

10. Système d'amortissement du bruit suivant l'une des revendications 1 à 5, dans lequel l'autre dispositif (58) de réduction du bruit est prévu en amont du boîtier (40) du silencieux (24, 30), la au moins une ouverture (70) de sortie de l'autre dispositif (58) de réduction du bruit étant en liaison fluidique avec l'ouverture (48) d'admission du boîtier (40) .

11. Installation de préparation d'air comprimé, notamment pour des véhicules automobiles, comportant un système d'amortissement du bruit suivant l'une des revendications précédentes.

12. Installation de préparation d'air comprimé suivant la revendication 11, dans laquelle le silencieux (24) communique avec une sortie d'une vanne (22) de purge, prévue en amont d'un dispositif (14) de séchage de l'air.
